# EUROPÄISCHE PATENTSCHRIFT

(11) **EP 3 483 853 B1**
(45) Veröffentlichungstag und Bekanntmachung des Hinweises auf die Patenterteilung: **06.09.2023**
(21) Anmeldenummer: 18203026.2
(22) Anmeldetag: 29.10.2018
(51) Int. Cl.: G08C 17/02, F16M 11/04, G05D 23/19, G06F 1/16, G08C 23/04

(54) **DRAHTLOSE SMARTHOME-BEDIENVORRICHTUNG**
WIRELESS SMART HOME CONTROL DEVICE
DISPOSITIF DE COMMANDE DE MAISON INTELLIGENTE SANS FIL

(30) Priorität: 14.11.2017 DE 102017220260
(43) Veröffentlichungstag der Anmeldung: 15.05.2019
(73) Patentinhaber: Robert Bosch GmbH, 70442 Stuttgart (DE)
(72) Erfinder: Schneider, Marcel, 35457 Lollar (DE); Kroeger, Martin, 70199 Stuttgart (DE); Knauer, Markus, 71229 Leonberg (DE); Langer, Daniel, 35469 Allendorf (Lumda) (DE); Kreutz, Friedhelm, 55118 Mainz (DE); Schneider, Thorsten, 35096 Weimar/Roth (DE); Terzioglu, Enis, 73529 Schwaebisch Gmuend Rechberg (DE); Herz, Stefan, 65812 Bad Soden (DE); Heukrodt, Benjamin, 55126 Mainz (DE)

(56) Entgegenhaltungen:
- EP-A1- 2 908 200
- DE-A1-102015 121 173
- US-A- 5 644 302
- US-A1- 2007 021 152
- US-A1- 2012 068 832
- US-A1- 2015 316 285
- US-A1- 2017 059 196

## Beschreibung

### Stand der Technik

Es ist bereits eine drahtlose Smarthome-Bedienvorrichtung mit zumindest einem stationären Element, mit zumindest einem tragbaren Bedienelement und mit zumindest einer Koppeleinheit zu einer Kopplung des stationären Elements mit dem tragbaren Bedienelement, vorgeschlagen worden.

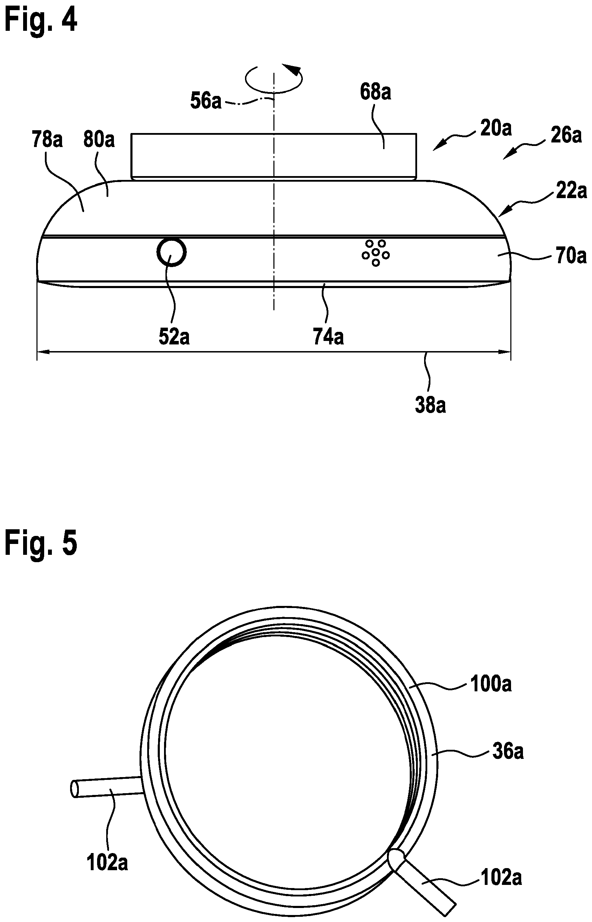

US 2017/059196 A1 offenbart die Merkmale des Oberbegriffs des Anspruchs 1: eine drahtlose Smarthome-Bedienvorrichtung (102), zumindest zu einer Bedienung einer SmarthomeFunktionseinheit (vgl. Abs. [0048], [0051] und [0053]), mit zumindest einem stationären Element (542), mit zumindest einem tragbaren Bedienelement (540) und mit zumindest einer Koppeleinheit zu einer physischen Kopplung des stationären Elements (542) mit dem tragbaren Bedienelement (540) (vgl. Abs. [0073]). Das tragbare Bedienelement (540) bildet in einem mittels der Koppeleinheit gekoppelten Zustand ein Makrobedienelement aus, wobei das Makrobedienelement zumindest ein Rotationserkennungsmodul aufweist, zumindest zu einer Erkennung einer Rotationsposition, zumindest eines Teils (512, 514) des Makrobedienelements (vgl. Abs. [0004], [0041], [0071], [0075] und [0078]), und wobei ein Bedienvorgang des Makrobedienelements zumindest teilweise ein zumindest teilweises Rotieren zumindest eines Teils (512) des Makrobedienelements gegenüber zumindest einem weiteren Teil (514) des Makrobedienelements umfasst (vgl. Abs. [0002] sowie Figur 5A).

Offenbarung der Erfindung Erfindungsgemäss werden eine Smarthome-Bedienvorrichtung gemäss Anspruch 1 und ein Verfahren gemäss Anspruch 13 bereitgestellt. Bevorzugte Ausführungsformen sind in den abhängigen Ansprüchen definiert.

Die Erfindung geht aus von einer drahtlosen Smarthome-Bedienvorrichtung, insbesondere zumindest zu einer Bedienung zumindest einer Leuchte, einer Alarmanlage, eines Thermostaten, einer schaltbaren Steckdose oder ähnlichem, mit zumindest einem stationären Element, mit zumindest einem tragbaren Bedienelement und mit zumindest einer Koppeleinheit zu einer, insbesondere physischen, Kopplung des stationären Elements mit dem tragbaren Bedienelement.

Es wird vorgeschlagen, dass das tragbare Bedienelement in einem mittels der Koppeleinheit gekoppelten Zustand ein, insbesondere genau ein, Makrobedienelement ausbildet. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann. Zudem kann vorteilhaft mittels des Makrobedienelements ein körperliches Feedback als Reaktion auf eine Bedienung erzeugt werden, wodurch insbesondere eine hohe Bedienermotivation erreicht werden kann. Außerdem kann dadurch vorteilhaft eine gute Merkbarkeit, beispielsweise eines mittels der Smarthome-Bedienvorrichtung eingegebenen Codes, erreicht werden. Ferner kann vorteilhaft eine Flexibilität erhöht werden, beispielsweise indem das tragbare Element mit verschiedenen stationären Elementen an verschiedenen Orten koppelbar ist und/oder indem vorteilhaft eine Mehrzahl an verschiedenen Smarthome Funktionseinheiten mittels des Makrobedienelements bedienbar sein können. Beispielsweise könnten verschiedene Smarthome-Funktionseinheiten verschiedenen stationären Elementen zugeordnet sein, mit welchen die tragbare Einheit koppelbar ist. Alternativ könnten verschiedene Smarthome-Funktionseinheiten auf dem tragbaren Element auswählbar sein, wobei insbesondere eine Kopplung mit dem stationären Element eine Bedienung der ausgewählten Smarthome-Funktionseinheit ermöglicht.

Insbesondere ist das Makrobedienelement dazu vorgesehen, einen Einstell- und/oder Bedienvorgang mittels Nudging zu ermöglichen, wobei insbesondere ein Einstell- und/oder Bedienvorgang mittels eines leichten Anstoßens, leichten Verkippens und/oder leichten Verdrehens zumindest eines Teils des Makrobedienelements vornehmbar ist. Vorzugsweise erfolgt nach jedem Einstell- und/oder Bedienvorgang mittels Nudging, insbesondere mittels eines leichten Anstoßens, Verkippens und/oder Verdrehens des Makrobedienelements eine selbsttätige Rückauslenkung, welche vorteilhaft als ein körperliches Feedback für eine erfolgreiche Durchführung des Einstell- und/oder Bedienvorgangs von einem Bediener wahrnehmbar ist.

Unter "drahtlos" soll insbesondere frei von Kabeln, insbesondere elektrischen Leitern und/oder Lichtwellenleitern, kommunizierend verstanden werden. Insbesondere kommuniziert eine drahtlose Smarthome-Bedienvorrichtung mittels einem Funkverfahren, beispielsweise Bluetooth, WLAN, ZigBee, NFC, Wibree und/oder WiMAX und/oder einem optischen Datenübertragungsverfahren, wie beispielsweise einem Infrarot-Datenübertragungsverfahren. Unter einer "Bedienung einer Smarthome-Funktionseinheit" soll insbesondere eine Aktivierung und/oder Deaktivierung der Smarthome-Funktionseinheit und/oder zumindest einer Funktion der Smarthome-Funktionseinheit, eine Einstellung zumindest eines Funktionsparameters der Smarthome-Funktionseinheit und/oder eine Abfrage zumindest eines Funktionsparameters der Smarthome-Funktionseinheit verstanden werden. Eine Smarthome-Funktionseinheit kann insbesondere als zumindest eine Alarmanlage, als zumindest eine Beleuchtungsanlage, insbesondere zumindest eine Leuchte, als zumindest eine Heizungsanlage, als zumindest eine Klimatisierungsanlage, als zumindest ein Sicht- und/oder Sonnenschutz, als zumindest eine schaltbare Steckdose, als zumindest ein Haushaltsgerät und/oder als zumindest ein Unterhaltungselektronikgerät ausgebildet sein. Das stationäre Element ist insbesondere als ein Element ausgebildet, welches, insbesondere in einem statischen Bauwerk, beispielsweise einer Hauswand, unbeweglich verankerbar ist. Das tragbare Bedienelement ist insbesondere als ein elektronisches, vorzugsweise batterie- und/oder akkubetriebenes, Bedienelement ausgebildet. Das tragbare Bedienelement ist insbesondere von einer erwachsenen Durchschnittsperson in einer Hand tragbar. Insbesondere ist das tragbare Bedienelement leichter als 2 kg, vorzugsweise leichter als 1 kg, vorteilhaft leichter als 500 g, besonders vorteilhaft leichter als 300 g, bevorzugt leichter als 150 g und besonders bevorzugt leichter als 100 g. Unter einer "physischen Kopplung" soll insbesondere eine Kopplung verstanden werden, bei der sich die miteinander koppelbaren Elemente in einem gekoppelten Zustand kontaktieren. Insbesondere bewirkt die physische Kopplung zu einer Haltekraft zwischen miteinander koppelbaren Elemente in einem gekoppelten Zustand. Insbesondere ist die physische Kopplung verschieden von einer reinen Datenverbindung, insbesondere einer drahtlosen Datenverbindung und/oder einer Datenverbindung mittels eines Kabels. Unter einem "Makrobedienelement" soll insbesondere ein Bedienelement verstanden werden, welches eine Angriffsfläche und/oder Bedienfläche von zumindest 200 cm², vorzugsweise zumindest 150 cm², vorteilhaft zumindest 100 cm², besonders vorteilhaft zumindest 70 cm², bevorzugt zumindest 50 cm² und besonders bevorzugt zumindest 35 cm² aufweist. Insbesondere ist das Makrobedienelement verschieden von einer Tastatur ausgebildet. Insbesondere ist das Makrobedienelement zu einer Bedienung mit zumindest einer ganzen Hand, vorzugsweise zumindest einer Handinnenfläche vorgesehen. Insbesondere ist die drahtlose Smarthome-Bedienvorrichtung im gekoppelten Zustand frei von weiteren Makrobedienelementen.

Ferner wird vorgeschlagen, dass das Makrobedienelement zumindest einen Dreh- Kipp- und/oder Druckschalter ausbildet. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann. Zudem kann vorteilhaft mittels des Makrobedienelements ein körperliches Feedback als Reaktion auf eine Bedienung erzeugt werden, wodurch insbesondere eine hohe Bedienermotivation erreicht werden kann. Außerdem kann dadurch vorteilhaft eine gute Merkbarkeit, beispielsweise eines mittels der Smarthome-Bedienvorrichtung eingegebenen Codes, erreicht werden.

Des Weiteren wird vorgeschlagen, dass das tragbare Bedienelement, insbesondere das Makrobedienelement, zumindest ein, insbesondere in das tragbare Bedienelement, vorzugsweise in das Makrobedienelement, integrierten, Display aufweist. Dadurch können insbesondere vorteilhafte Eigenschaften hinsichtlich eines Bedienkomforts erreicht werden. Insbesondere können vorteilhaft mittels des tragbaren Bedienelements, insbesondere des Makrobedienelements vornehmbare und/oder vorgenommene Einstellungen direkt anzeigbar sein. Das Display kann insbesondere als zumindest ein LCD-Display, als zumindest ein OLED-Display und/oder als zumindest ein SED-Display ausgebildet sein. Insbesondere weist das Display eine Hintergrundbeleuchtung, vorzugsweise ein LED-Backlight, auf. Vorzugsweise ist das Display als ein E-Paper-Display ausgebildet. Dadurch kann vorteilhaft ein niedriger Energieverbrauch ermöglicht werden. Vorzugsweise ist das Display auf einer im gekoppelten Zustand einem Benutzer zugewandten Seite und/oder einer dem stationären Element abgewandten Seite angeordnet. Alternativ oder zusätzlich ist vorstellbar, dass das tragbare Element einen Projektor zu einer Projektion einer Anzeige, beispielsweise auf eine das tragbare Element umgebende Wand und/oder eine Hand eines Benutzers aufweist. Zudem ist denkbar, dass das tragbare Element zumindest eine Leuchteinheit und/oder eine akustische Signaleinheit aufweist zu einer Bestätigung eines Bedienvorgangs durch einen Benutzer. Beispielsweise könnte nach jeder Betätigung des, insbesondere als Dreh- Kipp- und/oder Druckschalter ausgebildeten, Makrobedienelements ein Teil des Makrobedienelements und/oder der das Makrobedienelement benutzenden Hand kurzzeitig durch die Leuchteinheit angeleuchtet werden.

Zudem wird vorgeschlagen, dass eine maximale Kantenlänge einer längsten Kante eines kleinsten gedachten Quaders, welcher das Makrobedienelement gerade noch vollständig umschließt weniger als 10 cm, insbesondere weniger als 8,5 cm, vorzugsweise weniger als 7 cm, vorteilhaft weniger als 5,5 cm und bevorzugt mehr als 4 cm beträgt. Dadurch können insbesondere vorteilhafte Eigenschaften hinsichtlich eines Bedienkomforts erreicht werden, insbesondere kann eine gute Haptik ermöglicht werden. Vorteilhaft kann dadurch eine Größe des Makrobedienelements auf durchschnittliche Größen von Handinnenflächen einer Benutzergruppe abgestimmt werden. Insbesondere beträgt eine maximale Kantenlänge einer zweitlängsten Kante eines kleinsten gedachten Quaders, welcher das Makrobedienelement gerade noch vollständig umschließt weniger als 10 cm, insbesondere weniger als 8,5 cm, vorzugsweise weniger als 7 cm, vorteilhaft weniger als 5,5 cm und bevorzugt mehr als 4 cm.

Außerdem wird vorgeschlagen, dass das stationäre Element frei ist von beweglichen, insbesondere rotierbaren, Teilen. Dadurch kann vorteilhaft eine geringe Komplexität erreicht werden, wodurch vorteilhaft Kosten reduziert werden können. Insbesondere ist das stationäre Element zu einer Befestigung an einem festen Gebäudeteil, beispielsweise einer Wand, vorgesehen. Es ist denkbar, dass stationäre Elemente an verschiedenen Orten eines Smarthomes installiert sind. Dadurch können vorteilhaft mittels des tragbaren Bedienelements an verschiedenen Orten Makrobedienelemente erzeugt werden, welche insbesondere zu einer Bedienung identischer und/oder verschiedener Smarthome-Funktionselemente verwendbar sind. Dadurch kann vorteilhaft ein Benutzerkomfort weiter verbessert werden.

Erfindungsgemäss wird vorgeschlagen, dass ein Bedienvorgang, insbesondere ein Einstell- und/oder Verstellvorgang, des Makrobedienelements zumindest teilweise ein zumindest teilweises Rotieren zumindest eines Teils des Makrobedienelements, insbesondere des tragbaren Bedienelements, gegenüber zumindest einem weiteren Teil des Makrobedienelements, insbesondere des tragbaren Bedienelements, umfasst. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann. Zudem kann vorteilhaft mittels des Makrobedienelements ein körperliches Feedback als Reaktion auf eine Bedienung erzeugt werden, wodurch insbesondere eine hohe Bedienermotivation erreicht werden kann. Außerdem kann dadurch vorteilhaft eine gute Merkbarkeit, beispielsweise eines mittels der Smarthome-Bedienvorrichtung eingegebenen Codes, erreicht werden.

Erfindungsgemäss sind der Teil des Makrobedienelements, insbesondere des tragbaren Bedienelements, und/oder der weitere Teil des Makrobedienelements, insbesondere des tragbaren Bedienelements insbesondere gegeneinander, rotierbar gelagert. Eine rotierbare Lagerung des Teils des Makrobedienelements, insbesondere des tragbaren Bedienelements, und/ oder des weiteren Teils des Makrobedienelements, insbesondere des tragbaren Bedienelements, ermöglicht und/oder erlaubt insbesondere eine Rotation zumindest des Teils des Makrobedienelements, insbesondere des tragbaren Bedienelements, und/oder zumindest des weiteren Teils des Makrobedienelements, insbesondere des tragbaren Bedienelements, in einem Uhrzeigersinn und/oder eine Rotation entgegen dem Uhrzeigersinn, insbesondere relativ zu dem jeweiligen anderen Teil des Makrobedienelements, insbesondere des tragbaren Bedienelements. Insbesondere ermöglicht und/oder erlaubt eine rotierbare Lagerung des Teils des Makrobedienelements, insbesondere des tragbaren Bedienelements, und/ oder des weiteren Teils des Makrobedienelements, insbesondere des tragbaren Bedienelements, eine, vorzugsweise gegenseitige, Rotation zumindest des Teils des Makrobedienelements, insbesondere des tragbaren Bedienelements, und/oder zumindest des weiteren Teils des Makrobedienelements, insbesondere des tragbaren Bedienelements, um einen Winkel von zumindest 5°, vorzugsweise zumindest 8°, vorteilhaft zumindest 10°, besonders vorteilhaft zumindest 12° . Unter einer "gegenseitigen Rotation" soll insbesondere eine Rotation verstanden werden, welche ein Verdrehen des Teils des Makrobedienelements, insbesondere des tragbaren Bedienelements, gegenüber dem weiteren Teil des Makrobedienelements, insbesondere des tragbaren Bedienelements, umfasst.

Ferner wird vorgeschlagen, dass das tragbare Bedienelement zumindest ein Widerstandselement zu einer, insbesondere periodischen, Beeinflussung und/oder zu einer Begrenzung einer Rotation zumindest eines, insbesondere rotierbaren, Teils des Makrobedienelements, insbesondere des tragbaren Bedienelements, gegenüber zumindest einem weiteren Teil des Makrobedienelements, insbesondere des tragbaren Bedienelements, aufweist. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann. Zudem kann vorteilhaft mittels des Makrobedienelements ein körperliches Feedback als Reaktion auf eine Bedienung erzeugt werden, wodurch insbesondere eine hohe Bedienermotivation erreicht werden kann.

Zudem kann vorteilhaft eine gute Steuerbarkeit und/oder Einstellpräzision bei einem Bedienvorgang ermöglicht werden, insbesondere indem der Bediener durch Fühlen eines Widerstands abschätzen kann, wie weit er das Makrobedienelement bewegt hat und/oder ob er das Makrobedienelement weit genug für die gewünschte Einstellung bewegt hat. Zudem kann vorteilhaft eine einfache Eingabe eines Codes, welcher beispielsweise aus einer Abfolge von kurzen Rechts- und/ oder Linksdrehungen besteht, ermöglicht werden. Insbesondere ist das Widerstandselement dazu vorgesehen, eine Rotation des zumindest einen Teils des Makrobedienelements, insbesondere des tragbaren Bedienelements, gegenüber des zumindest einen weiteren Teils des Makrobedienelements, insbesondere des tragbaren Bedienelements auf einen maximalen Rotationswinkel von höchstens 15°, bevorzugt von höchstens 12° und besonders bevorzugt von höchstens 8° zu begrenzen. Alternativ oder zusätzlich ist das Widerstandselement dazu vorgesehen, einen, insbesondere durch einen Bediener bei einem Verdrehen des Makrobedienelements fühlbaren, Widerstand gegen die Rotationsbewegung jeweils bei, insbesondere zumindest im Wesentlichen gleich beabstandeten, Rotationsschritten von zumindest 2°, vorzugsweise zumindest 3°, vorteilhaft zumindest 5°, bevorzugt zumindest 10° und besonders bevorzugt höchstens 20° zu erzeugen. Das Widerstandselement kann insbesondere als ein Festanschlag oder als ein Reibelement, welches insbesondere dazu vorgesehen ist, bei bestimmten Rotationsschritten einen erhöhten, vorzugsweise eine Freiheit der Rotation beeinflussenden, Reibungswiderstand zu erzeugen, ausgebildet sein. Unter einer "Beeinflussung der Rotation" soll insbesondere eine Beeinflussung der Rotationsfreiheit der Rotation, insbesondere durch eine Veränderung, insbesondere Erhöhung, eines Rotationswiderstands, verstanden werden. Unter einer "Begrenzung der Rotation" soll insbesondere eine Beschränkung des Rotationswinkels auf den maximalen Rotationswinkel verstanden werden.

Zudem wird vorgeschlagen, dass ein maximaler Rotationswinkel bei einem Rotieren zumindest eines Teils des Makrobedienelements gegenüber zumindest einem weiteren Teil des Makrobedienelements höchstens 15°, vorteilhaft höchstens 12° und besonders vorteilhaft zumindest 5° beträgt. Dadurch kann vorteilhaft eine einfache und intuitive Bedienmöglichkeit geschaffen werden. Vorzugsweise beträgt ein Rotationswinkel bei einem einmaligen Betätigen des Makrobedienelements mittels Rotation etwa 11°, insbesondere zumindest 10° und höchstens 12°. Vorzugsweise beträgt ein Rotationswinkel bei einem einmaligen Betätigen des Makrobedienelements mittels Rotation höchstens etwa 11°, insbesondere höchstens zwischen 10° und 12°. Dadurch kann vorteilhaft eine für einen Bediener als angenehm empfundene Bedienbarkeit erreicht werden. Vorteilhaft kann eine Betätigung des Makrobedienelements mittels Rotation um etwa 11°, insbesondere um zumindest 10° und um höchstens 12°, von einem Bediener gut als eine Bewegung wahrgenommen werden, wobei die Rotation um etwa 11°, insbesondere um zumindest 10° und um höchstens 12°, von dem Bediener vorteilhaft nicht als eine Drehung wahrgenommen wird. Insbesondere übersteigt eine Bewegung des Makrobedienelements um etwa 11°, insbesondere um zumindest 10° und um höchstens 12°, knapp eine Wahrnehmbarkeitsgrenze, welche die durch den Bediener vorgenommene Bewegung vorteilhaft von einer, insbesondere produktionsbedingten und/oder qualitätsabhängigen, Bewegung des Makrobedienelements durch ein Wackeln und/oder ein Spiel abhebt. Vorteilhaft kann dem Bediener dadurch eine schnelle und/oder zeitsparende Bedienbarkeit ermöglicht werden, beispielsweise kann dadurch ein schnelles Durchgehen und/oder Bedienen eines auf dem Display angezeigten Menüs ermöglicht werden, wodurch insbesondere ein Bedienkomfort verbessert werden kann. Vorzugsweise ist der maximale Rotationswinkel bei einer Drehung in Uhrzeigerrichtung gleich wie bei einer Drehung in die entgegengesetzte Richtung.

Erfindungsgemäss wird vorgeschlagen, dass das Makrobedienelement, insbesondere das tragbare Bedienelement, zumindest ein Rückstellelement aufweist zu einer Rückstellung, insbesondere einer rotatorischen und/oder translatorischen Auslenkung, zumindest eines aus einem Ausgangzustand ausgelenkten Teils des Makrobedienelements, insbesondere des tragbaren Bedienelements, zurück in den Ausgangszustand. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann. Zudem kann insbesondere durch eine Bedienerführung mittels einer selbstständigen Rückauslenkung vorteilhaft eine Simplizität einer Bedienfunktion erhöht werden. Des Weiteren können vorteilhaft Fehlbedienungen, beispielswiese durch eine fehlerhafte und/oder unzureichende Rückauslenkung durch einen Bediener, vermieden werden. Das Rückstellelement kann insbesondere zumindest teilweise als zumindest eine Feder, vorzugsweise eine Schenkelfeder, als zumindest ein elastisches Band, beispielsweise ein Gummiband, als zumindest ein elastischer Block, beispielsweise ein Gummiblock und/oder als zumindest ein Elektromotor ausgebildet sein. Unter einem "Ausgangszustand" soll insbesondere ein zumindest im Wesentlichen von äußeren, insbesondere durch einen Bediener erzeugten, Kräften freier Zustand verstanden werden. Der Ausgangszustand des Makrobedienelements ist insbesondere als der Zustand ausgebildet, in welchem sich das Makrobedienelement unmittelbar nach einer Kopplung des tragbaren Bedienelements und des stationären Elements befindet

Des Weiteren wird vorgeschlagen, dass die Koppeleinheit zumindest ein Koppelelement, insbesondere Formschlusselement, aufweist, zu einer Ausbildung einer zumindest im Wesentlichen passgenauen, insbesondere formschlüssigen, Verbindung zumindest des stationären Elements mit zumindest dem tragbaren Bedienelement. Dadurch kann vorteilhaft eine stabile Kopplung ermöglicht werden. Zudem kann vorteilhaft mittels eines Koppelelements eine bevorzugte relative Ausrichtung des tragbaren Bedienelements und des stationären Elements zueinander festgelegt werden. Das Koppelelement kann insbesondere als ein Formschlusselement ausgebildet sein, welches insbesondere zusätzlich zu einer passgenauen Verbindung eine Haltekraft erzeugende Verbindung ausbildet. Insbesondere umfasst die Koppeleinheit ein Koppelelement des tragbaren Bedienelements und/oder ein Koppelelement des stationären Elements. Das Koppelelement des tragbaren Bedienelements und das Koppelelement des stationären Elements sind als miteinander, insbesondere passgenau, korrespondierende Koppelelemente ausgebildet. Insbesondere ist das tragbare Bedienelement mittels des Koppelelements des tragbaren Bedienelements auf das stationäre Element, insbesondere das Koppelelement des stationären Elements, aufsetzbar, insbesondere aufsteckbar. Insbesondere weisen die Koppelelemente zumindest eine zumindest im Wesentlichen zueinander komplementäre Außenkontur auf. Insbesondere ist die Außenkontur des Koppelelements des tragbaren Bedienelements und/oder des stationären Elements asymmetrisch und/oder rotationsunsymmetrisch ausgebildet. Dadurch kann vorteilhaft ein Verdrehen der Koppelelemente gegeneinander, insbesondere bei einer Rotation zumindest eines Teils des tragbaren Bedienelements, vermieden werden. Zudem ist denkbar, dass die Außenkontur eine, insbesondere komplexe, Form ausbildet, welche dazu vorgesehen ist, bevorzugt eine Passverbindung möglichst ausschließlich zwischen dem tragbaren Bedienelement und dem stationären Element zuzulassen, wodurch vorteilhaft eine Fehlbedienung unterbunden werden kann. Insbesondere sind die Koppelelemente als Komponenten eines Poka-Yoke-Systems ausgebildet, wodurch vorteilhaft eine Gefahr einer Fehlbedienung weiter reduziert werden kann. Insbesondere ist das Koppelelement des tragbaren Bedienelements als eine weibliche Steckverbindung, insbesondere Buchse, ausgebildet. Insbesondere ist das Koppelelement des stationären Elements als eine männliche Steckverbindung, insbesondere hervorstehendes Steckerelement, ausgebildet. Es ist denkbar, dass das tragbare Bedienelement und/oder das stationäre Element zumindest ein weiteres Koppelelement aufweist zu einer weiteren zumindest im Wesentlichen passgenauen, insbesondere formschlüssigen, Verbindung des stationären Elements mit zumindest dem tragbaren Bedienelement. Dadurch kann vorteilhaft eine besonders hohe Bediensicherheit erreicht werden, insbesondere indem Fehlbedienungen, beispielsweise durch eine fehlerhafte Kopplung und/oder durch eine Kopplung unzusammenpassender Teile, vermieden werden können. Unter einer "im Wesentlichen passgenauen Verbindung" soll insbesondere eine Verbindung von zumindest zwei Koppelelementen verstanden werden, bei welcher zumindest 90 %, vorzugsweise zumindest 95 %, vorteilhaft zumindest 98 %, bevorzugt zumindest 99 % und besonders bevorzugt 100 % einer Außenkontur eines Querschnitts eines Koppelelements eine Außenkontur eines Querschnitts des anderen Koppelelements berühren. Vorzugsweise ist eine passgenaue Verbindung spielfrei.

Weiterhin wird vorgeschlagen, dass die Koppeleinheit, insbesondere das stationäre Element, zumindest ein Magnetelement aufweist, zu einer Ausbildung einer kraftschlüssigen Verbindung zumindest mit dem tragbaren Bedienelement. Dadurch kann vorteilhaft ein Bedienkomfort erhöht werden, insbesondere indem eine sicher und einfach verbindbare und/oder lösbare Koppelmöglichkeit geschaffen werden kann. Zudem kann vorteilhaft eine Kopplung vereinfacht werden, insbesondere indem mittels der Magnetelemente eine Feinausrichtung der zu koppelnden Elemente unterstützt werden kann. Insbesondere ist das Magnetelement als ein Permanentmagnet ausgebildet. Alternativ oder zusätzlich kann das Magnetelement als ein Elektromagnet ausgebildet sein. Insbesondere weist die Koppeleinheit, vorzugsweise das stationäre Element, eine Mehrzahl an Magnetelementen auf. Insbesondere weist die Koppeleinheit, insbesondere das tragbare Bedienelement, zumindest ein, vorzugsweise eine Mehrzahl an, Metallelementen auf. Das Metallelement ist insbesondere zumindest teilweise aus einem magnetischen, vorzugsweise ferromagnetischen, Material ausgebildet. Das Metallelement ist insbesondere zu einer Wechselwirkung mit dem Magnetelement vorgesehen. Vorzugsweise ist das tragbare Bedienelement frei von Magnetelementen, insbesondere Permanentmagneten.

Wenn die Koppeleinheit ein Erkennungsmodul zu einer gegenseitigen Identifikation des stationären Elements und des tragbaren Bedienelements aufweist, kann vorteilhaft eine Fehlfunktion und/oder Fehlbedienung vermieden werden. Zudem kann vorteilhaft eine Sicherheit erhöht werden, beispielsweise indem bestimmte tragbare Bedienelemente für eine Kopplung mit bestimmten stationären Elementen freischaltbar und/oder sperrbar sind, dadurch kann beispielsweise eine unautorisierte Bedienung einer Smarthome-Funktion, beispielsweise eine Alarmanlagenaktivierung und/oder -deaktivierung, unterbunden werden. Das Erkennungsmodul kann insbesondere als ein mechanisches Erkennungsmodul, beispielweise ein Schlüssel und/oder eine bestimmte Form der Koppelelemente, insbesondere Formschlusselemente, und/oder als ein elektronisches Erkennungsmodul, welches beispielsweise über Magnetfelder und/oder elektrische Felder eine Identifikation durchführt, ausgebildet sein. Insbesondere erfolgt eine Erkennung mittels des Erkennungsmoduls automatisch. Insbesondere kann das Erkennungsmodul zumindest teilweise als Teil des stationären Elements und/oder als Teil des tragbaren Bedienelements ausgebildet sein. Insbesondere kann eine Identifikationsfunktion des Erkennungsmoduls konfigurierbar sein, beispielsweise indem zulässige Kopplungen definierbar sind.

Zudem wird vorgeschlagen, dass das Makrobedienelement, insbesondere das tragbare Bedienelement, zumindest einen Drucktaster aufweist. Dadurch kann vorteilhaft eine Flexibilität erhöht werden, insbesondere indem zusätzliche Bedienmöglichkeiten geschaffen werden können. Insbesondere kann der Drucktaster, welcher insbesondere verschieden von einem Ein- / Aus-Schalter ausgebildet ist, an einem Seitenbereich des tragbaren Bedienelements und/oder auf einer Vorderseite, welche insbesondere das Display umfasst, des tragbaren Bedienelements angeordnet sein. Alternativ oder zusätzlich ist vorstellbar, dass das gesamte Makrobedienelement einen Drucktaster ausbildet.

Erfindungsgemäss wird vorgeschlagen, dass das Makrobedienelement, insbesondere das tragbare Bedienelement, zumindest ein Rotationspositionserkennungsmodul aufweist, zumindest zu einer Erkennung einer Rotationsposition, zumindest eines, insbesondere rotierbaren, Teils des Makrobedienelements, insbesondere das tragbare Bedienelements. Dadurch kann vorteilhaft eine Flexibilität erhöht werden, insbesondere indem zusätzliche Bedienmöglichkeiten geschaffen werden können. Insbesondere ist das Rotationspositionserkennungsmodul dazu vorgesehen, ein "rotiertes Halten" bei einer bestimmten Winkelposition, insbesondere für einen, einen bestimmten Schwellenwert überschreitenden Zeitraum, zu sensieren. Dadurch kann vorteilhaft eine zusätzliche Bedienfunktion eines "rotiertes Haltens" des Makrobedienelements für einen bestimmten Zeitraum geschaffen werden. Insbesondere ist das Rotationspositionserkennungsmodul als eine optische Messvorrichtung ausgebildet. Alternativ kann das Rotationspositionserkennungsmodul als ein Tastmodul, beispielsweise ein Laufrad, als eine elektrische Messvorrichtung, welche beispielweise je nach Rotationsposition eine Spannung an einem unterschiedlichen Ort abgreift und/oder als ein Gyrosensor ausgebildet sein.

Des Weiteren wird vorgeschlagen, dass das Makrobedienelement eine Infrarot Schnittstelle aufweist. Dadurch kann vorteilhaft eine hohe Flexibilität erreicht werden, insbesondere indem eine Steuermöglichkeit, insbesondere Fernsteuermöglichkeit für Smarthome-Funktionseinheiten mit zumindest einer Infrarot Schnittstelle, beispielsweise einem Fernseher, geschaffen werden kann. Vorteilhaft kann dadurch eine Remote-Remote-Funktion geschaffen werden. Beispielweise ist denkbar, dass das Makrobedienelement Informationen von einem Smartphone empfängt, beispielsweise eine Vormerkung eines bestimmten vom Benutzer präferierten Art eines Fernsehprogramms, woraufhin die Smarthome-Bedienvorrichtung für den Benutzer, wenn er einen Fernsehmodus mittels der drahtlosen Smarthome-Bedienvorrichtung aktiviert, automatisch einen Sender mit dem aktuell passendsten Programm über die Infrarot-Schnittstelle anwählt. Dadurch kann vorteilhaft ein Bedienkomfort verbessert werden.

Weiterhin wird ein tragbares Bedienelement der drahtlosen Smarthome-Bedienvorrichtung mit einem Koppelelement vorgeschlagen. Dadurch können insbesondere vorteilhafte Eigenschaften hinsichtlich eines Bedienkomforts erreicht werden, insbesondere indem eine Bedienung verschiedener Smarthome-Funktionseinheiten mobil aus verschiedenen Orten innerhalb und/oder außerhalb eines Smarthomes ermöglicht werden kann. Zudem kann vorteilhaft das tragbare Bedienelement flexibel an verschiedenen Orten mit verschiedenen stationären Elementen zur Bedienung verschiedener Smarthome-Funktionseinheiten koppelbar sein.

Zudem wird ein stationäres Element der drahtlosen Smarthome-Bedienvorrichtung mit einem, insbesondere mit einem Koppelelement der Koppeleinheit koppelbaren, vorzugsweise zu dem Koppelelement des tragbaren Bedienelements komplementären, Koppelelement vorgeschlagen. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann.

Außerdem wird ein System mit zumindest einer drahtlosen Smarthome-Bedienvorrichtung und mit zumindest einer Smarthome-Funktionseinheit vorgeschlagen. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann. Zudem kann vorteilhaft mittels des Makrobedienelements ein körperliches Feedback als Reaktion auf eine Bedienung erzeugt werden, wodurch insbesondere eine hohe Bedienermotivation erreicht werden kann.

Verfahren zur Bedienung einer drahtlosen Smarthome-Bedienvorrichtung mit zumindest einem stationären Element, mit zumindest einem tragbaren Bedienelement und mit zumindest einer Koppeleinheit zu einer, insbesondere physischen, Kopplung des stationären Elements mit dem tragbaren Bedienelement, wobei das tragbare Bedienelement mittels der Koppeleinheit mit dem stationären Element zur Ausbildung eines Makrobedienelements gekoppelt wird. Dadurch können insbesondere vorteilhafte Eigenschaften hinsichtlich eines Bedienkomforts erreicht werden, insbesondere indem ein einfach und/oder intuitiv zu bedienendes Bedienelement geschaffen werden kann.

Weiterhin wird vorgeschlagen, dass, insbesondere in zumindest einem weiteren Verfahrensschritt, das tragbare Bedienelement zu einer Durchführung eines Bedienvorgangs, insbesondere eines Einstell- und/oder Verstellvorgangs zur Ein- und/oder Verstellung zumindest eines Einstellparameters einer Smarthome-Funktionseinheit, zumindest zu einem Teil relativ zu dem stationären Element um eine Achse, zumindest um einen Teil einer vollen Umdrehung um die Achse rotiert wird. Dadurch können insbesondere vorteilhafte Eigenschaften hinsichtlich eines Bedienkomforts erreicht werden, insbesondere indem eine einfache und/oder intuitive Bedienmöglichkeit geschaffen werden kann. Zudem kann vorteilhaft mittels des Makrobedienelements ein körperliches Feedback als Reaktion auf eine Bedienung erzeugt werden, wodurch insbesondere eine hohe Bedienermotivation erreicht werden kann.

Die erfindungsgemäße drahtlose Smarthome-Bedienvorrichtung und/oder das erfindungsgemäße Verfahren soll/sollen hierbei nicht auf die oben beschriebene Anwendung und Ausführungsform beschränkt sein. Insbesondere kann die erfindungsgemäße drahtlose Smarthome-Bedienvorrichtung, das erfindungsgemäße tragbare Bedienelement, das erfindungsgemäße stationäre Element und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnung Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, perspektivische Ansicht eines Systems mit einem drahtlosen Smarthome-Bedienelement in einer Explosionsdarstellung und mit verschiedenen Smarthome-Funktionselementen,
- Fig. 2: eine schematische Rückansicht eines tragbaren Bedienelements des drahtlosen Smarthome-Bedienelements,
- Fig. 3: eine schematische, perspektivische Innenansicht des tragbaren Bedienelements,
- Fig. 4: eine schematische Seitenansicht eines Makrobedienelements des drahtlosen Smarthome-Bedienelements,
- Fig. 5: eine schematische, perspektivische Ansicht eines Rückstellelements des tragbaren Bedienelements,
- Fig. 6: ein Ablaufdiagramm eines Verfahrens zur Bedienung des Smarthome-Bedienelements und
- Fig. 7: eine schematische Ansicht eines alternativen Koppelelements eines alternativen tragbaren Bedienelements.

### Beschreibung der Ausführungsbeispiele

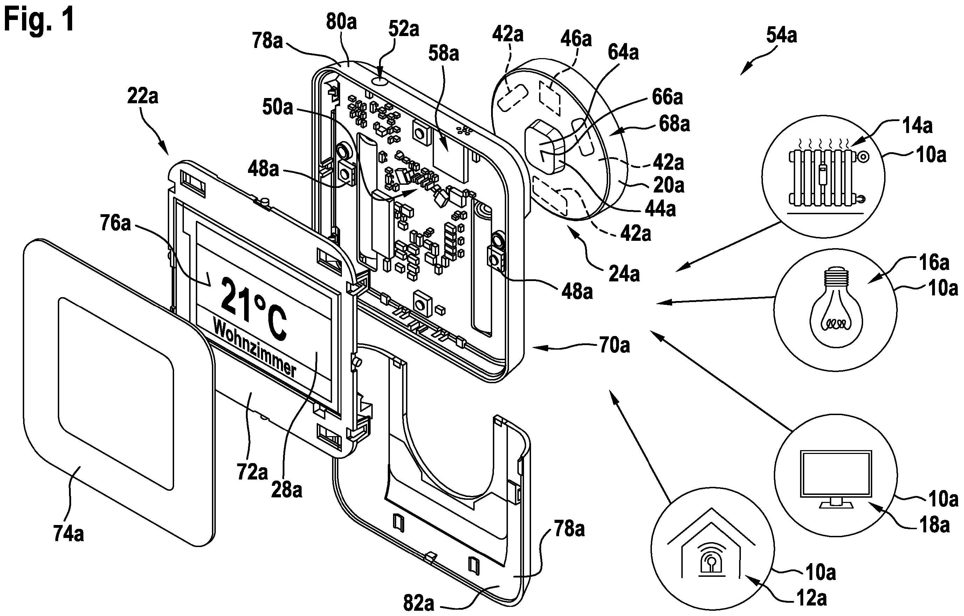

Fig. 1 zeigt ein System 54a mit einer drahtlosen Smarthome-Bedienvorrichtung und mit Smarthome-Funktionseinheiten 10a. Die Smarthome-Funktionseinheiten 10a sind als Alarmanlage 12a, als Heizungsanlage 14a, als Leuchtanlage 16a und als Unterhaltungselektronikgerät 18a ausgebildet. Die drahtlose Smarthome-Bedienvorrichtung ist zu einer Bedienung der Smarthome-Funktionseinheiten 10a vorgesehen. Die drahtlose Smarthome-Bedienvorrichtung kommuniziert drahtlos mit den Smarthome-Funktionseinheiten 10a. Die drahtlose Smarthome-Bedienvorrichtung weist eine Kommunikationseinheit 58a zu einer drahtlosen Kommunikation mit den Smarthome Funktionseinheiten 10a auf.

Die drahtlose Smarthome-Bedienvorrichtung weist ein stationäres Element 20a auf. Das stationäre Element 20a zu einer Montage an einem statischen Bauwerk vorgesehen. Das stationäre Element 20a ist frei von beweglichen Teilen. Das stationäre Element 20a weist einen Grundkörper 68a auf. Der Grundkörper 68a des stationären Elements 20a weist eine zumindest im Wesentlichen runde Scheibenform auf.

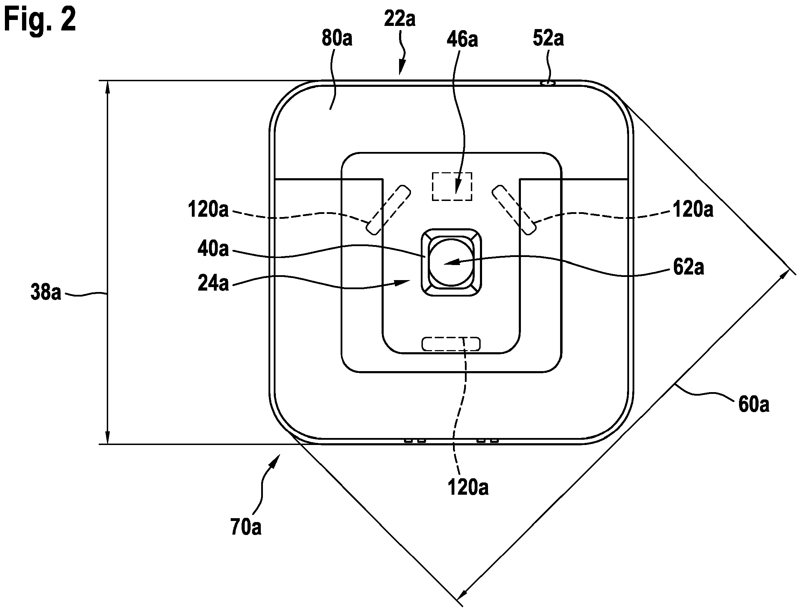

Die drahtlose Smarthome-Bedienvorrichtung weist ein tragbares Bedienelement 22a auf. Das tragbare Bedienelement 22a weist einen Grundkörper 70a auf. Der Grundkörper 70a des tragbaren Bedienelements 22a weist eine zumindest im Wesentlichen quaderförmige Außenform auf. Das tragbare Bedienelement 22a weist ein Gehäuse 78a auf. Das Gehäuse 78a ist teilweise einstückig mit dem Grundkörper 70a ausgebildet. Das Gehäuse 78a ist in zwei Teilgehäuse 80a, 82a teilbar. Die Teilgehäuse 80a, 82 sind mittels einer Steckverbindung verbindbar. Das tragbare Bedienelement 22a weist eine maximale Erstreckung 60a auf (vgl. Fig. 2). Die maximale Erstreckung 60a beträgt 10 cm. Das tragbare Bedienelement 22a weist ein Display 28a auf. Das Display 28a ist in das tragbare Bedienelement 22a integriert. Das Display 28a ist auf einer flachen Vorderseite des tragbaren Bedienelements 22a angeordnet. Das Display 28a erstreckt sich über einen Großteil einer Oberfläche der Vorderseite des tragbaren Bedienelements 22a. Das tragbare Bedienelement 22a weist eine Displayhalterung 72a auf. Die Displayhalterung 72a ist zu einer Halterung des Displays 28a vorgesehen. Die Displayhalterung 72a ist relativ zu dem Grundkörper 70a des tragbaren Bedienelements 22a beweglich gelagert. Das tragbare Bedienelement 22a weist eine Fensterabdeckung 74a auf. Die Fensterabdeckung 74a ist zu einem Schutz des Displays 28a vorgesehen. Die Fensterabdeckung 74a ist auf einer dem Display 28a zugewandten Seite der Displayhalterung 72a angeordnet. Die Fensterabdeckung 74a ist mit der Displayhalterung 72a verklebt. Die Fensterabdeckung 74a ist teilweise transparent ausgebildet.

Die drahtlose Smarthome-Bedienvorrichtung weist eine Koppeleinheit 24a auf. Die Koppeleinheit 24a ist zu einer physischen Kopplung des stationären Elements 20a mit dem tragbaren Bedienelement 22a vorgesehen. Die Koppeleinheit 24a weist zwei Koppelelemente 40a, 44a auf. Die Koppelelemente 40a, 44a sind zu einer Ausbildung einer zumindest im Wesentlichen passgenauen Verbindung des stationären Elements 20a mit dem tragbaren Bedienelement 22a vorgesehen. Die passgenaue Verbindung ist dazu vorgesehen ein Verdrehen der Koppelelemente 40a, 44a gegeneinander zu unterbinden. Das tragbare Bedienelement 22a weist ein Koppelelement 40a auf. Das stationäre Element 20a weist ein Koppelelement 44a auf. Die Koppelelemente 40a, 44a sind komplementär zueinander ausgebildet. Das Koppelelement 40a der tragbaren Bedienelement 22a ist als eine Vertiefung 62a ausgebildet. Das Koppelelement 40a des tragbaren Bedienelements 22a ist auf einer dem Display 28a abgewandten Seite des tragbaren Bedienelements 22a angeordnet. Die Vertiefung 62a weist zumindest teilweise eine Form eines leicht länglichen Rechtecks mit abgerundeten Ecken auf. Das Koppelelement 44a des stationären Elements 20a ist als eine Erhebung 64a ausgebildet. Die Erhebung 64a weist eine Form eines leicht länglichen Rechtecks mit abgerundeten Ecken auf. Das Koppelelement 44a des stationären Elements 20a ist auf einer flachen Seite des scheibenförmigen stationären Elements 20a angeordnet. Das Koppelelement 40a des tragbaren Bedienelements 22a und das Koppelelement 44a des stationären Elements 20a sind dazu vorgesehen passgenau ineinander einzugreifen. Eine Herstellung der passgenauen Verbindung erfolgt mittels einer Annäherung des tragbaren Bedienelements 22a auf das stationäre Element 20a in einer Richtung senkrecht zu einer Oberfläche 66a des Koppelelements 44a des stationären Elements 20a.

Die Koppeleinheit 24a weist zumindest ein Magnetelement 42a auf. Das stationäre Element 20a weist drei Magnetelemente 42a auf. Das Magnetelement 42a ist zu einer Ausbildung einer kraftschlüssigen Verbindung des stationären Elements 20a mit dem tragbaren Bedienelement 22a vorgesehen. Das Magnetelement 42a weist eine längliche Rechteckform auf. Das Magnetelement 42a ist tangential zu einem gedachten Kreis um einen Mittelpunkt des stationären Elements 20a angeordnet. Alternativ kann das Magnetelement 42a eine von einer Rechteckform verschiedene Form und/oder von einer Tangentialanordnung verschiedene Anordnung relativ zu dem Grundkörper 68a des stationären Elements 20a aufweisen.

Die Koppeleinheit 24a weist zumindest ein Metallelement 120a auf. Das tragbare Bedienelement 22a weist drei Metallelemente 120a auf. Das Metallelement 120a ist aus einem ferromagnetischen Material ausgebildet. Das Metallelement 120a ist zu einer Ausbildung einer kraftschlüssigen Verbindung des stationären Elements 20a mit dem tragbaren Bedienelement 22a vorgesehen. Das Metallelement 120a ist zu einer Wechselwirkung mit einem Magnetfeld des Magnetelements 42a vorgesehen. Das Metallelement 120a weist eine längliche Rechteckform auf. Das Metallelement 120a ist tangential zu einem gedachten Kreis um einen Mittelpunkt des tragbaren Bedienelements 22a angeordnet. Eine Anordnung der Metallelemente 120a in dem tragbaren Bedienelement 22a korrespondiert zu einer Anordnung der Magnetelemente 42a in dem stationären Element 20a. Alternativ kann das Metallelement 120a eine von einer Rechteckform verschiedene Form und/oder von einer Tangentialanordnung verschiedene Anordnung relativ zu dem Grundkörper 70a des tragbaren Bedienelement 22a aufweisen.

Die Koppeleinheit 24a weist ein Erkennungsmodul 46a auf (vgl. Fig. 2). Das Erkennungsmodul 46a ist zu einer gegenseitigen Identifikation des stationären Elements 20a und des tragbaren Bedienelements 22a vorgesehen. Das Erkennungsmodul 46a umfasst eine NFC Kommunikation zwischen dem stationären Element 20a und dem tragbaren Bedienelement 22a. Die NFC Kommunikation ist von dem tragbaren Bedienelement 22a ausgehend gesteuert.

In einem mittels der Koppeleinheit 24a mit dem stationären Element 20a gekoppelten Zustand, bildet das tragbare Bedienelement 22a ein Makrobedienelement 26a aus (vgl. auch Fig. 4). Das Makrobedienelement 26a weist eine maximale Kantenlänge 38a einer längsten Kante eines kleinsten gedachten Quaders, welcher das Makrobedienelement 26a gerade noch vollständig umschließt auf. Das tragbare Bedienelement 22a weist eine maximale Kantenlänge 38a einer längsten Kante eines kleinsten gedachten Quaders, welcher das Makrobedienelement 26a gerade noch vollständig umschließt auf (vgl. Fig. 2). Die maximalen Kantenlängen 38a des Makrobedienelements 26a und des tragbaren Bedienelements 22a sind identisch. Die maximale Kantenlänge 38a beträgt 7 cm. Das Makrobedienelement 26a weist eine Infrarot Schnittstelle 52a auf. Das tragbare Bedienelement 22a weist eine Infrarot-Schnittstelle 52a auf. Das Makrobedienelement 26a weist vier Drucktaster 48a auf. Das tragbare Bedienelement 22a weist vier Drucktaster 48a auf. Die Drucktaster 48a sind mittels eines Bewegens der Displayhalterung 72a betätigbar.

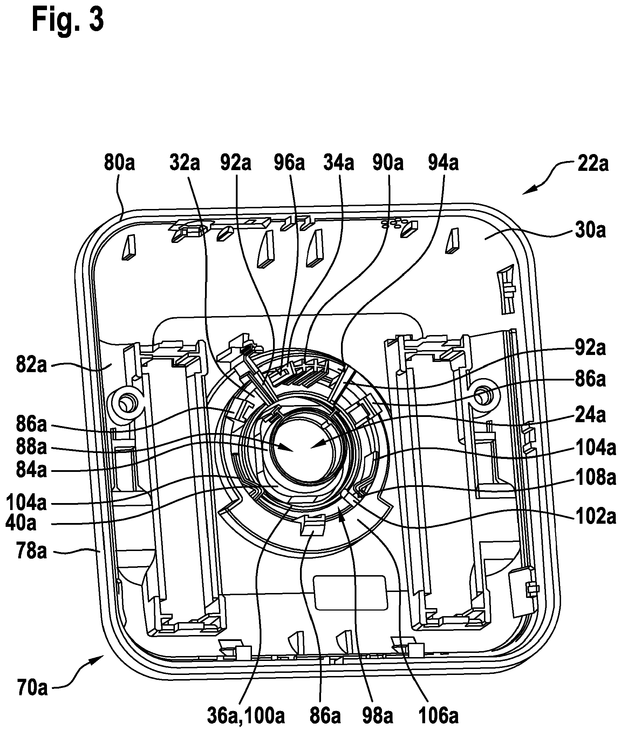

Das Makrobedienelement 26a bildet einen Dreh- Kipp- und/oder Druckschalter aus. Das Makrobedienelement 26a weist zwei gegeneinander bewegliche Teile 30a, 32a auf (vgl. Fig. 3). Die zueinander beweglich gelagerten Teile 30a, 32a des Makrobedienelements 26a sind im gekoppelten Zustand relativ zu einem Ausgangszustand kippbar gelagert. Die zueinander beweglich gelagerten Teile 30a, 32a des Makrobedienelements 26a sind im gekoppelten Zustand relativ zu einem Ausgangszustand um eine Achse 56a rotierbar gelagert. Die Achse 56a verläuft senkrecht zu der Oberfläche 66a des Koppelelements 44a des stationären Elements 20a (vgl. Fig. 4). Die Achse 56a verläuft senkrecht zu einer Oberfläche 76a des Displays 28a. Die zueinander beweglich gelagerten Teile 30a, 32a des Makrobedienelements 26a sind im gekoppelten Zustand relativ zu einem Ausgangszustand entlang der Achse 56a translatorisch verschiebbar gelagert.

Fig. 3 zeigt eine schematische, perspektivische Innenansicht des tragbaren Bedienelements 22a. Die Teilgehäuse 80a, 82a sind zu dem Gehäuse 78a zusammengesteckt. Das Gehäuse 78a weist im Inneren eine Schalenform auf. Das Gehäuse 78a weist eine durchgehende Ausnehmung 88a auf. Die Ausnehmung 88a ist kreisförmig ausgebildet. Die Ausnehmung 88a ist zu einer Aufnahme eines Einsatzelements 84a vorgesehen. Das Einsatzelement 84a ist als ein von dem Gehäuse 78a separates Spritzgussteil ausgebildet. Das Einsatzelement 84a weist Rasthaken 86a auf. Die Rasthaken 86a sind zu einer formschlüssigen Montage des Einsatzelements 84a in der Ausnehmung 88a des Gehäuses 78a vorgesehen. In der in Fig. 3 gezeigten Darstellung ist das Einsatzelement 84a in dem Gehäuse 78a befestigt. Die Rasthaken 86a sind dazu vorgesehen, eine Drehung des Einsatzelement 84a in der Ausnehmung 88a des Gehäuses 78a zu erlauben. Die Rasthaken 86a weisen eine an einer Seitenfläche eine, insbesondere nicht näher gezeigte, minimierte Kontaktfläche zu einem Kontakt mit einer Seitenwand der Ausnehmung 88a bei einer Rotation des Gehäuses 78a auf. Dadurch kann vorteilhaft ein Verschleiß gering gehalten werden. Die Rasthaken 86a sind dazu vorgesehen, eine Bewegung des Einsatzelement 84a in der Ausnehmung 88a des Gehäuses 78a in Richtung eines Inneren des Gehäuses 78a zu erlauben. Das Gehäuse 78a und das Einsatzelements 84a bilden beweglich gelagerte Teile 30a, 32a des Makrobedienelements 26a aus. Ein Bedienvorgang des Makrobedienelements 26a umfasst ein zumindest teilweises Rotieren eines Teils 30a des Makrobedienelements 26a gegenüber einem weiteren Teil 32a des Makrobedienelements 26a. Ein Bedienvorgang des Makrobedienelements 26a umfasst ein zumindest teilweises Rotieren des Gehäuses 78a gegenüber dem Einsatzelement 84a.

Das tragbare Bedienelement 22a weist ein Widerstandselement 34a auf. Das Widerstandselement 34a ist zu einer Beeinflussung und/oder zu einer Begrenzung der Rotation eines Teils 30a des Makrobedienelements 26a gegenüber einem weiteren Teil 32a des Makrobedienelements 26a vorgesehen. Das Widerstandselement 34a ist zu einer Begrenzung der Rotation des Gehäuses 78a gegenüber dem Einsatzelement 84a vorgesehen. Das Widerstandselement 34a ist einstückig mit dem Einsatzelement 84a ausgebildet. Das Widerstandselement 34a ist als eine Erhebung 90a des Einsatzelements 84a ausgebildet. Die Erhebung 90a erstreckt sich in einem montierten Zustand in ein Inneres des Gehäuses 78a. Das Widerstandselement 34a weist auf zwei gegenüberliegenden Seiten Anschlagflächen 96a auf. Das tragbare Bedienelement 22a weist zwei korrespondierende Widerstandselemente 92a auf. Die korrespondierenden Widerstandselemente 92a sind einstückig mit dem Gehäuse 78a ausgebildet. Die korrespondierenden Widerstandselemente 92a sind als in die Ausnehmung 88a hineinragende Fortsätze ausgebildet. Die korrespondierenden Widerstandselemente 92a weisen eine korrespondierende Anschlagfläche 94a auf. Die korrespondierenden Widerstandselemente 92a sind in zwei mögliche Drehrichtungen relativ zu dem Widerstandselement 34a angeordnet. Die korrespondierenden Widerstandselemente 92a sind dazu vorgesehen bei einer Rotation des Makrobedienelements 26a an dem Widerstandselement 34a anzuschlagen. Eine der korrespondierenden Anschlagflächen 94a kontaktiert je nach Drehrichtung eine der Anschlagflächen 96a zu einer Begrenzung der Rotation des Makrobedienelements 26a. Ein maximaler Rotationswinkel bei einem Rotieren des Teils 32a des Makrobedienelements 26a gegenüber dem weiteren Teil 32a des Makrobedienelements 26a beträgt etwa 12°, vorzugsweise etwa 11°. Eine Rotation des Teils 32a des Makrobedienelements 26a gegenüber dem weiteren Teil 32a des Makrobedienelements 26a um den maximalen Rotationswinkel ist derart ausgebildet, dass sie von einem Bediener nicht als eine Rotation wahrgenommen wird. Es sind jedoch auch andere maximale Rotationswinkel denkbar, welche zumindest teilweise eindeutig als Rotation durch einen Bediener wahrgenommen werden können.

Das Makrobedienelement 26a weist ein Rückstellelement 36a auf (vgl. auch Fig. 5). Das Rückstellelement 36a ist zu einer Rückstellung zumindest eines aus einem Ausgangzustand ausgelenkten Teils 30a des Makrobedienelements 26a zurück in den Ausgangszustand vorgesehen. Das Rückstellelement 36a ist zu einer Rückauslenkung des Gehäuses 78a nach einer Auslenkung relativ zu dem Einsatzelement 84a vorgesehen. Das Rückstellelement 36a ist als eine Schenkelfeder 100a ausgebildet. Das Rückstellelement 36a weist zwei Spannelemente 102a auf. Die Spannelemente 102a sind als Schenkel der Schenkelfeder 100a ausgebildet. Die Spannelemente 102a sind zum Anlegen einer Spannkraft vorgesehen. Die Spannkraft ist umso größer umso mehr die Spannelemente 102a aufeinander zubewegt sind. Das Rückstellelement 36a ist in einer Aussparung 98a des Einsatzelements 84a angeordnet. Das Rückstellelement 36a ist zumindest im Wesentlichen zentriert um die Achse 56a angeordnet. Das Rückstellelement 36a ist zumindest im Wesentlichen zentriert in der Ausnehmung 88a angeordnet. Das Einsatzelement 84a weist zwei Einspannelemente 104a auf. Das Rückstellelement 36a ist zwischen den zwei Einspannelementen 104a eingespannt. Die Einspannelemente 104a weisen Anlageflächen 108a für die Spannelemente 102a auf. Die Spannelemente 102a liegen an den Anlageflächen 108a der Einspannelementen 104a auf Spannung an. Das Gehäuse 78a weist ein weiteres Einspannelement 106a auf. Das weitere Einspannelement 106a ist als eine Nut ausgebildet. Das weitere Einspannelement 106a erstreckt sich über ein entlang einem Rand der kreisförmigen Ausnehmung 88a verlaufendes Kreissegment. Das weitere Einspannelement 106a ist radial von einem Zentrum der Ausnehmung 88a weiter beabstandet als das Einspannelement 104a. Die Anlageflächen 108a der Einspannelemente 104a liegen in einem Ausgangszustand und/oder Grundzustand bündig mit in Umfangsrichtung der Ausnehmung 88a liegenden, sich in Radialrichtung der Ausnehmung 88a erstreckenden Seitenwänden (nicht gezeigt) des weiteren Einspannelements 106a. Eine Rotation des Gehäuses 78a bewirkt eine Verschiebung des weiteren Einspannelements 106a entlang einer Kreisbahn. Das an einer Seitenwand des weiteren Einspannelements 106a anliegende Spannelement 102a bewegt sich bei einer Rotation des Gehäuses 78a mit dem weiteren Einspannelement 106a mit. Ein Mitbewegen des Spannelements 102a mit dem weiteren Einspannelement 106a bei einer Rotation des Gehäuses 78a führt zu einer Spannung des Rückstellelements 36a. Ein Entspannen des Rückstellelements 36a führt zu einer gegenläufigen Rotation des Gehäuses 78a. Die gegenläufige Rotation des Gehäuses 78a stoppt bei einem Anschlag des Spannelements 102a an der Anlagefläche 108a des Spannelements 102a.

Das Makrobedienelement 26a weist ein Rotationspositionserkennungsmodul 50a auf (vgl. Fig. 1). Das Rotationspositionserkennungsmodul 50a ist zu einer Erkennung einer Rotationsposition eines Teils 30a, 32a des Makrobedienelements 26a vorgesehen.

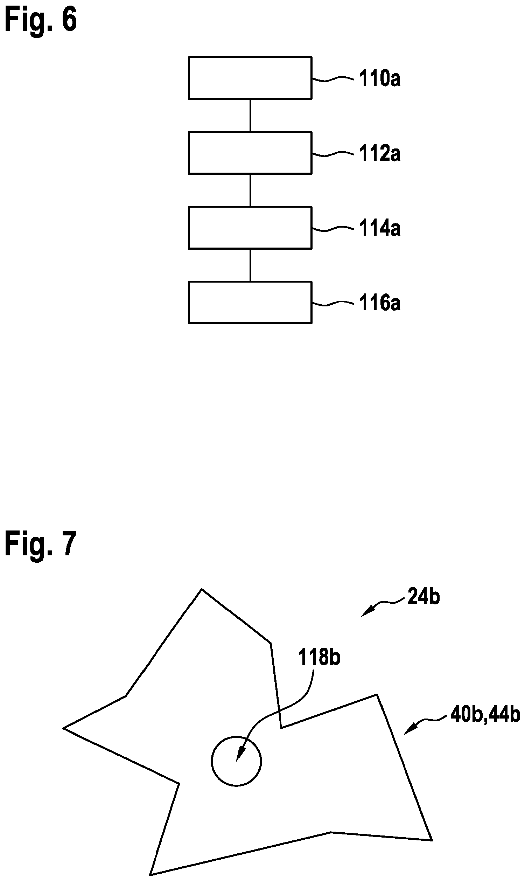

Fig. 6 zeigt ein Ablaufdiagramm eines Verfahrens zur Bedienung einer drahtlosen Smarthome-Bedienvorrichtung. In zumindest einem Verfahrensschritt 110a wird das tragbare Bedienelement 22a mittels der Koppeleinheit 24a mit dem stationären Element 20a gekoppelt. In zumindest einem weiteren Verfahrensschritt 112a wird mittels der Kopplung des tragbaren Bedienelements 22a und des stationären Elements 20a ein Makrobedienelement 26a ausgebildet. In zumindest einem weiteren Verfahrensschritt 114a wird das tragbare Bedienelement 22a zu einer Durchführung eines Bedienvorgangs, insbesondere eines Einstell- und/oder Verstellvorgangs zur Ein- und/oder Verstellung zumindest eines Einstellparameters einer Smarthome-Funktionseinheit 10a, zumindest zu einem Teil relativ zu dem stationären Element 20a um eine Achse 56a, zumindest um einen Teil einer volten Umdrehung um die Achse 56a rotiert. In zumindest einem weiteren Verfahrensschritt 116a wird ein Teil 30a des tragbaren Bedienelements 22a nach einer Auslenkung mittels des Rückstellelements 36a in einen Ausgangszustand rückausgelenkt.

In der Figur 7 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In dem Ausführungsbeispiel der Figur 7 ist der Buchstabe a durch den Buchstaben b ersetzt.

Fig. 7 zeigt einen Teil einer alternativen Koppeleinheit 24b einer drahtlosen Smarthome Bedienvorrichtung. Die Koppeleinheit 24b weist Koppelelemente 40b, 44b auf. Das in Fig. 7 gezeigte alternative Koppelelements 40b eines tragbaren Bedienelements 22b einer drahtlosen Smarthome Bedienvorrichtung weist eine alternative Form auf. Alternativ kann Fig. 7 auch eine alternative Form eines Koppelelements 44b eines stationären Elements 20b der drahtlosen Smarthome Bedienvorrichtung zeigen. Die Form des Koppelelements 40b, 44b ist asymmetrisch. Die Form des Koppelelements 40b, 44b ist rotationsunsymmetrisch. Das Koppelelement 40b, 44b ist als ein Teil eines Poka-Yoke-Systems ausgebildet. Dadurch kann vorteilhaft eine Fehlbedienung, insbesondere eine fehlerhafte Kopplung vermieden werden. Die Koppeleinheit 24b weist ein zusätzliches Koppelelement 118b auf. Das zusätzliche Koppelelement 118b ist als eine kreisförmige Ausnehmung und/oder eine säulenförmige Erhebung ausgebildet. Das zusätzliche Koppelelement 118b bildet ein weiteres Teil des Poka-Yoke-Systems aus. Das zusätzliche Koppelelement 118b bildet vorteilhaft eine zusätzliche Sicherung gegen Fehlbenutzung und/oder unautorisierte Nutzung aus.

## Patentansprüche

1. Drahtlose Smarthome-Bedienvorrichtung, zumindest zu einer Bedienung zumindest einer Smarthome-Funktionseinheit (10a-b), mit zumindest einem stationären Element (20a-b), mit zumindest einem tragbaren Bedienelement (22a-b) und mit zumindest einer Koppeleinheit (24a-b) zu einer, physischen, Kopplung des stationären Elements (20a-b) mit dem tragbaren Bedienelement (22a-b), wobei das tragbare Bedienelement (22a-b) in einem mittels der Koppeleinheit (24a-b) gekoppelten Zustand ein Makrobedienelement (26a-b) ausbildet, wobei das Makrobedienelement (26a-b) zumindest ein Rotationspositionserkennungsmodul (50a-b) aufweist, zumindest zu einer Erkennung einer Rotationsposition; zumindest eines Teils (30a-b; 32a-b) des Makrobedienelements (26a-b), wobei ein Bedienvorgang des Makrobedienelements (26a-b) zumindest teilweise ein zumindest teilweises Rotieren zumindest eines Teils (30a-b) des Makrobedienelements (26a-b) gegenüber zumindest einem weiteren Teil (32a-b) des Makrobedienelements (26a-b) umfasst, **dadurch gekennzeichnet, dass** das Makrobedienelement (26a-b) zumindest ein Rückstellelement (36a-b) aufweist zu einer Rückstellung einer rotatorischen Auslenkung des zumindest einen aus einem Ausgangszustand ausgelenkten Teils (30a-b) des Makrobedienelements (26ab) zurück in den Ausgangszustand, wobei der Ausgangszustand des Makrobedienelements (26a-b) als der Zustand ausgebildet ist, in welchem sich das Makrobedienelement (26a-b) unmittelbar nach einer Kopplung des tragbaren Bedienelements (22a-b) und des stationären Elements (20a-b) befindet, und wobei ein maximaler Rotationswinkel bei einem Rotieren des zumindest einen Teils (30a-b) des Makrobedienelements (26a-b) gegenüber dem zumindest einen weiteren Teil (32a-b) des Makrobedienelements (26a-b) höchstens 15° beträgt.

2. Drahtlose Smarthome-Bedienvorrichtung nach Anspruch 1, **dadurch gekennzeichnet, dass** das Makrobedienelement (26a-b) zumindest einen Dreh-, Kipp- und/oder Druckschalter ausbildet.

3. Drahtlose Smarthome-Bedienvorrichtung nach Anspruch 1 oder 2, **dadurch gekennzeichnet, dass** das tragbare Bedienelement (22a-b) zumindest ein Display (28a-b) aufweist.

4. Drahtlose Smarthome-Bedienvorrichtung nach einem der vorhergehenden Ansprüche, **dadurch gekennzeichnet, dass** eine maximale Kantenlänge (38ab) einer längsten Kante eines kleinsten gedachten Quaders, welcher das Makrobedienelement (26a-b) gerade noch vollständig umschließt weniger als 10 cm beträgt.

5. Drahtlose Smarthome-Bedienvorrichtung nach einem der vorhergehenden Ansprüche, **dadurch gekennzeichnet, dass** das stationäre Element (20a-b) frei ist von beweglichen Teilen.

6. Drahtlose Smarthome-Bedienvorrichtung nach einem der vorhergehenden Ansprüche, **dadurch gekennzeichnet, dass** das tragbare Bedienelement (22ab) zumindest ein Widerstandselement (34a-b) zu einer Beeinflussung und/oder zu einer Begrenzung einer Rotation zumindest eines Teils (30a-b) des Makrobedienelements (26a-b) gegenüber zumindest einem weiteren Teil (32ab) des Makrobedienelements (26a-b) aufweist.

7. Drahtlose Smarthome-Bedienvorrichtung nach einem der vorhergehenden Ansprüche, **dadurch gekennzeichnet, dass** die Koppeleinheit (24a-b) zumindest ein Koppelelement (40a-b, 44a-b) aufweist, zu einer Ausbildung einer zumindest im Wesentlichen passgenauen Verbindung zumindest des stationären Elements (20a-b) mit zumindest dem tragbaren Bedienelement (22a-b).

8. Drahtlose Smarthome-Bedienvorrichtung nach einem der vorhergehenden Ansprüche, **dadurch gekennzeichnet, dass** die Koppeleinheit (24a-b) zumindest ein Magnetelement (42a-b) aufweist, zu einer Ausbildung einer kraftschlüssigen Verbindung, zumindest mit dem tragbaren Bedienelement (22a-b).

9. Drahtlose Smarthome-Bedienvorrichtung nach einem der vorhergehenden Ansprüche, **dadurch gekennzeichnet, dass** die Koppeleinheit (24a-b) ein Erkennungsmodul (46a-b) zu einer gegenseitigen Identifikation des stationären Elements (20a-b) und des tragbaren Bedienelements (22a-b) aufweist.

10. Drahtlose Smarthome-Bedienvorrichtung nach einem der vorhergehenden Ansprüche, **dadurch gekennzeichnet, dass** das Makrobedienelement (26a-b) zumindest einen Drucktaster (48a-b) aufweist.

11. Drahtlose Smarthome-Bedienvorrichtung nach einem der vorhergehenden Ansprüche, **dadurch gekennzeichnet, dass** das Makrobedienelement (26a-b) eine Infrarot Schnitt-stelle (52a-b) aufweist.

12. System (54a-b) mit zumindest einer drahtlosen Smarthome-Bedienvorrichtung nach einem der vorhergehenden Ansprüche und mit zumindest einer Smarthome-Funktionseinheit (10a-b).

13. Verfahren zur Bedienung einer drahtlosen Smarthome-Bedienvorrichtung, insbesondere nach einem der Ansprüche 1 bis 11, insbesondere eines Systems (54a-b) nach Anspruch 12, mit zumindest einem stationären Element (20a-b), mit zumindest einem tragbaren Bedienelement (22a-b) und mit zumindest einer Koppeleinheit (24a-b) zu einer, physischen, Kopplung des stationären Elements (20a-b) mit dem tragbaren Bedienelement (22a-b), wobei das tragbare Bedienelement (22a-b) mittels der Koppeleinheit (24a-b) mit dem stationären Element (20a-b) zur Ausbildung eines Makrobedienelements (26a-b) gekoppelt wird, wobei eine Rotationsposition zumindest eines Teils (30a-b; 32a-b) des Makrobedienelements (26a-b) durch zumindest ein Rotationspositionserkennungsmodul (50a-b) des Makroelements (26a-b) erkannt wird, wobei ein Bedienvorgang des Makrobedienelements (26a-b) zumindest teilweise ein zumindest teilweises Rotieren zumindest eines Teils (30a-b) des Makrobedienelements (26a-b) gegenüber zumindest einem weiteren Teil (32a-b) des Makrobedienelements (26a-b) umfasst, **dadurch gekennzeichnet, dass** zumindest der aus einem Ausgangszustand rotatorisch ausgelenkte Teil (30a-b) des Makrobedienelements (26a-b) durch zumindest ein Rückstellelement (36a-b) des Makrobedienelements (26a-b) in den Ausgangszustand rückgestellt wird, wobei der Ausgangszustand des Makrobedienelements (26a-b) als der Zustand ausgebildet ist, in welchem sich das Makrobedienelement (26a-b) unmittelbar nach einer Kopplung des tragbaren Bedienelements (22a-b) und des stationären Elements (20a-b) befindet, und wobei ein maximaler Rotationswinkel bei einem Rotieren des zumindest einen Teils (30a-b) des Makrobedienelements (26a-b) gegenüber dem zumindest einen weiteren Teil (32a-b) des Makrobedienelements (26a-b) höchstens 15° beträgt.

14. Verfahren nach Anspruch 13, **dadurch gekennzeichnet, dass** das tragbare Bedienelement (22a-b) zu einer Durchführung eines Bedienvorgangs, insbesondere eines Einstell- und/oder Verstellvorgangs zur Ein- und/oder Verstellung zumindest eines Einstellparameters einer Smarthome-Funktionseinheit (10a-b), zumindest zu einem Teil relativ zu dem stationären Element (20a-b) um eine Achse (56a-b), zumindest um einen Teil einer vollen Umdrehung um die Achse (56a-b) rotiert wird.

## Claims

1. Wireless smart home control device at least to control at least one smart home functional unit (10a-b), having at least one stationary element (20a-b), having at least one portable control element (22a-b) and having at least one coupling unit (24a-b) to, physically, couple the stationary element (20a-b) to the portable control element (22a-b), wherein the portable control element (22a-b), in a state coupled by means of the coupling unit (24a-b), produces a macro control element (26a-b), wherein the macro control element (26a-b) has at least one rotation position detection module (50a-b), at least to detect a rotation position of at least one part (30a-b; 32a-b) of the macro control element (26a-b), wherein at least part of a control operation of the macro control element (26a-b) comprises an at least partial rotation of at least one part (30a-b) of the macro control element (26a-b) with respect to at least one further part (32a-b) of the macro control element (26a-b), **characterized in that** the macro control element (26a-b) has at least one restoring element (36a-b) to restore a rotational deflection of the at least one part (30a-b) of the macro control element (26a-b) that is deflected from an initial state back to the initial state, wherein the initial state of the macro control element (26a-b) is in the form of the state that the macro control element (26a-b) is in immediately after the portable control element (22a-b) and the stationary element (20a-b) have been coupled, and wherein a maximum rotation angle for a rotation of the at least one part (30a-b) of the macro control element (26a-b) with respect to the at least one further part (32a-b) of the macro control element (26a-b) is at most 15°.

2. Wireless smart home control device according to Claim 1, **characterized in that** the macro control element (26a-b) produces at least one rotary, toggle and/or pushbutton switch.

3. Wireless smart home control device according to Claim 1 or 2, **characterized in that** the portable control element (22a-b) has at least one display (28a-b) .

4. Wireless smart home control device according to one of the preceding claims, **characterized in that** a maximum edge length (38a-b) of a longest edge of a smallest imaginary cuboid that only just completely encloses the macro control element (26a-b) is less than 10 cm.

5. Wireless smart home control device according to one of the preceding claims, **characterized in that** the stationary element (20a-b) is free of moving parts.

6. Wireless smart home control device according to one of the preceding claims, **characterized in that** the portable control element (22a-b) has at least one resistor element (34a-b) to influence and/or limit a rotation of at least one part (30a-b) of the macro control element (26a-b) with respect to at least one further part (32a-b) of the macro control element (26a-b) .

7. Wireless smart home control device according to one of the preceding claims, **characterized in that** the coupling unit (24a-b) has at least one coupling element (40a-b, 44a-b) to produce an at least substantially precisely fitting connection between at least the stationary element (20a-b) and at least the portable control element (22a-b).

8. Wireless smart home control device according to one of the preceding claims, **characterized in that** the coupling unit (24a-b) has at least one magnet element (42a-b) to produce a force-fit connection, at least with the portable control element (22a-b).

9. Wireless smart home control device according to one of the preceding claims, **characterized in that** the coupling unit (24a-b) has a detection module (46a-b) to allow the stationary element (20a-b) and the portable control element (22a-b) to identify one another.

10. Wireless smart home control device according to one of the preceding claims, **characterized in that** the macro control element (26a-b) has at least one pushbutton (48a-b).

11. Wireless smart home control device according to one of the preceding claims, **characterized in that** the macro control element (26a-b) has an infrared interface (52a-b).

12. System (54a-b) having at least one wireless smart home control device according to one of the preceding claims and having at least one smart home functional unit (10a-b).

13. Method for controlling a wireless smart home control device, in particular according to one of Claims 1 to 11, in particular of a system (54a-b) according to Claim 12, having at least one stationary element (20a-b), having at least one portable control element (22a-b) and having at least one coupling unit (24a-b) to, physically, couple the stationary element (20a-b) to the portable control element (22a-b), wherein the portable control element (22a-b) is coupled to the stationary element (20a-b) by means of the coupling unit (24a-b) to produce a macro control element (26a-b), wherein a rotation position of at least one part (30a-b; 32a-b) of the macro control element (26a-b) is detected by at least one rotation position detection module (50a-b) of the macro element (26a-b), wherein at least part of a control operation of the macro control element (26a-b) comprises an at least partial rotation of at least one part (30a-b) of the macro control element (26a-b) with respect to at least one further part (32a-b) of the macro control element (26a-b), **characterized in that** at least the part (30a-b) of the macro control element (26a-b) that is rotationally deflected from an initial state is restored to the initial state by at least one restoring element (36a-b) of the macro control element (26a-b), wherein the initial state of the macro control element (26a-b) is in the form of the state that the macro control element (26a-b) is in immediately after the portable control element (22a-b) and the stationary element (20a-b) have been coupled, and wherein a maximum rotation angle for a rotation of the at least one part (30a-b) of the macro control element (26a-b) with respect to the at least one further part (32a-b) of the macro control element (26a-b) is at most 15°.

14. Method according to Claim 13, **characterized in that** to perform a control operation, in particular a setting and/or adjusting operation to set and/or adjust at least one setting parameter of a smart home functional unit (10a-b), at least part of the portable control element (22a-b) is rotated relative to the stationary element (20a-b) about an axis (56a-b), at least through part of a full revolution about the axis (56a-b).

## Revendications

1. Dispositif de commande de maison intelligente sans fil, au moins pour commander au moins une unité fonctionnelle de maison intelligente (10a-b), comprenant au moins un élément stationnaire (20a-b), au moins un élément de commande portable (22a-b) et au moins une unité de couplage (24a-b) pour un couplage physique de l'élément stationnaire (20a-b) à l'élément de commande portable (22a-b), dans lequel, dans un état couplé au moyen de l'unité de couplage (24a-b), l'élément de commande portable (22a-b) réalise un macroélément de commande (26a-b), le macroélément de commande (26a-b) présentant au moins un module de reconnaissance de position de rotation (50a-b) au moins pour reconnaître une position de rotation au moins d'une partie (30a-b ; 32a-b) du macroélément de commande (26a-b), dans lequel une opération de commande du macroélément de commande (26a-b) comprend au moins en partie une rotation au moins partielle au moins d'une partie (30a-b) du macroélément de commande (26a-b) par rapport à au moins une autre partie (32a-b) du macroélément de commande (26a-b),
**caractérisé en ce que** le macroélément de commande (26a-b) présente au moins un élément de réinitialisation (36a-b) pour réinitialiser à l'état initial une déviation par rotation de ladite au moins une partie (30a-b), déviée d'un état initial, du macroélément de commande (26a-b), dans lequel l'état initial du macroélément de commande (26a-b) est réalisé comme l'état dans lequel le macroélément de commande (26a-b) se trouve immédiatement après un couplage de l'élément de commande portable (22a-b) et de l'élément stationnaire (20a-b), et dans lequel un angle de rotation maximal lors d'une rotation de ladite au moins une partie (30a-b) du macroélément de commande (26a-b) par rapport à ladite au moins une autre partie (32a-b) du macroélément de commande (26a-b) est de 15° au plus.

2. Dispositif de commande de maison intelligente sans fil selon la revendication 1, **caractérisé en ce que** le macroélément de commande (26a-b) réalise au moins un interrupteur rotatif, basculant et/ou à pression.

3. Dispositif de commande de maison intelligente sans fil selon la revendication 1 ou 2, **caractérisé en ce que** l'élément de commande portable (22a-b) présente au moins un affichage (28a-b).

4. Dispositif de commande de maison intelligente sans fil selon l'une quelconque des revendications précédentes, **caractérisé en ce qu'**une longueur d'arête maximale (38a-b) de la plus longue arête du plus petit parallélépipède imaginaire qui enferme tout juste complètement le macroélément de commande (26a-b) mesure moins de 10 cm.

5. Dispositif de commande de maison intelligente sans fil selon l'une quelconque des revendications précédentes, **caractérisé en ce que** l'élément stationnaire (20a-b) est exempt de toute pièce mobile.

6. Dispositif de commande de maison intelligente sans fil selon l'une quelconque des revendications précédentes, **caractérisé en ce que** l'élément de commande portable (22a-b) présente au moins un élément de résistance (34a-b) pour influencer et/ou limiter une rotation au moins d'une partie (30a-b) du macroélément de commande (26a-b) par rapport à au moins une autre partie (32a-b) du macroélément de commande (26a-b).

7. Dispositif de commande de maison intelligente sans fil selon l'une quelconque des revendications précédentes, **caractérisé en ce que** l'unité de couplage (24a-b) présente au moins un élément de couplage (40a-b, 44a-b) pour réaliser un assemblage au moins substantiellement ajusté au moins de l'élément stationnaire (20a-b) avec au moins l'élément de commande portable (22a-b).

8. Dispositif de commande de maison intelligente sans fil selon l'une quelconque des revendications précédentes, **caractérisé en ce que** l'unité de couplage (24a-b) présente au moins un élément magnétique (42a-b) pour réaliser un assemblage par adhérence, au moins avec l'élément de commande portable (22a-b).

9. Dispositif de commande de maison intelligente sans fil selon l'une quelconque des revendications précédentes, **caractérisé en ce que** l'unité de couplage (24a-b) présente un module de reconnaissance (46a-b) pour une identification mutuelle de l'élément stationnaire (20a-b) et de l'élément de commande portable (22a-b).

10. Dispositif de commande de maison intelligente sans fil selon l'une quelconque des revendications précédentes, **caractérisé en ce que** le macroélément de commande (26a-b) présente au moins un bouton-poussoir (48a-b).

11. Dispositif de commande de maison intelligente sans fil selon l'une quelconque des revendications précédentes, **caractérisé en ce que** le macroélément de commande (26a-b) présente une interface infrarouge (52a-b).

12. Système (54a-b), comprenant au moins un dispositif de commande de maison intelligente sans fil selon l'une quelconque des revendications précédentes et au moins une unité fonctionnelle de maison intelligente (10a-b).

13. Procédé de commande d'un dispositif de commande de maison intelligente sans fil, en particulier selon l'une quelconque des revendications 1 à 11, en particulier d'un système (54a-b) selon la revendication 12, comprenant au moins un élément stationnaire (20a-b), au moins un élément de commande portable (22a-b) et au moins une unité de couplage (24a-b) pour un couplage physique de l'élément stationnaire (20a-b) à l'élément de commande portable (22a-b), dans lequel l'élément de commande portable (22a-b) est couplé au moyen de l'unité de couplage (24a-b) à l'élément stationnaire (20a-b) pour réaliser un macroélément de commande (26a-b), dans lequel une position de rotation au moins d'une partie (30a-b ; 32ab) du macroélément de commande (26a-b) est reconnue par au moins un module de reconnaissance de position de rotation (50a-b) du macroélément de commande (26a-b), dans lequel une opération de commande du macroélément de commande (26a-b) comprend au moins en partie une rotation au moins partielle au moins d'une partie (30a-b) du macroélément de commande (26a-b) par rapport à au moins une autre partie (32a-b) du macroélément de commande (26a-b),
**caractérisé en ce qu'**au moins la partie (30a-b), déviée par rotation d'un état initial, du macroélément de commande (26a-b) est réinitialisé à l'état initial par au moins un élément de réinitialisation (36a-b) du macroélément de commande (26a-b), dans lequel l'état initial du macroélément de commande (26a-b) est réalisé comme l'état dans lequel le macroélément de commande (26a-b) se trouve immédiatement après un couplage de l'élément de commande portable (22a-b) et de l'élément stationnaire (20a-b), et dans lequel un angle de rotation maximal lors d'une rotation de ladite au moins une partie (30a-b) du macroélément de commande (26a-b) par rapport à ladite au moins une autre partie (32a-b) du macroélément de commande (26a-b) est de 15° au plus.

14. Procédé selon la revendication 13, **caractérisé en ce que** pour exécuter une opération de commande, en particulier une opération de réglage et/ou d'ajustage pour régler et/ou ajuster au moins un paramètre de réglage d'une unité fonctionnelle de maison intelligente (10a-b), l'élément de commande portable (22a-b) est amené à tourner au moins partiellement par rapport à l'élément stationnaire (20a-b) autour d'un axe (56a-b), au moins sur une partie d'un tour complet autour de l'axe (56a-b).
